(19) Europäisches Patentamt
European Patent Office
Office européen des brevets

(11) Veröffentlichungsnummer: **0 001 206**
**B1**

(12) **EUROPÄISCHE PATENTSCHRIFT**

(45) Veröffentlichungstag der Patentschrift: **26.08.81**

(21) Anmeldenummer: **78100613.5**

(22) Anmeldetag: **07.08.78**

(51) Int. Cl.³: **C 08 G 63/68,**
C 08 G 63/66,
C 08 G 81/00, D 06 P 1/613

(54) **Polykondensat, Verfahren zu seiner Herstellung und Verfahren zum gleichmässigen Färben von synthetischen Fasermaterialien unter Verwendung des Polykondensats als Egalisiermittel.**

(30) Priorität: **18.08.77 DE 2737239**

(43) Veröffentlichungstag der Anmeldung:
**04.04.79 Patentblatt 79/7**

(45) Bekanntmachung des Hinweises auf die Patenterteilung:
**26.08.81 Patentblatt 81/34**

(84) Benannte Vertragsstaaten:
**BE CH DE FR GB NL**

(56) Entgegenhaltungen:
**BE - A - 764 231**
**DE - A - 2 508 472**
**DE - A - 2 524 333**
**DE - A - 2 653 284**
**FR - A - 2 306 242**
**US - A - 3 033 824**

(73) Patentinhaber: **CASSELLA Aktiengesellschaft**
**Hanauer Landstrasse 526**
**D-6000 Frankfurt am Main 61 (DE)**

(72) Erfinder: **Weckler, Gerhard, Dr.**
**Billtalstrasse 36**
**D-6231 Sulzbach (DE)**
Erfinder: **Hauss, Hans Joachim**
**Simsonstrasse 7**
**D-6000 Frankfurt am Main (DE)**
Erfinder: **Hintermeier, Karl, Dr.**
**Hünfelder Strasse 18**
**D-6000 Frankfurt am Main (DE)**
Erfinder: **Engelhardt, Fritz, Dr.**
**Hünfelder Strasse 20**
**D-6000 Frankfurt am Main (DE)**

(74) Vertreter: **Urbach, Hans-Georg, Dr. et al,**
**Hanauer Landstrasse 526**
**D-6000 Frankfurt am Main 61 (DE)**

**EP 0 001 206 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Polykondensat Verfahren zu seiner Herstellung und Verfahren zum gleichmäßigen Färben von synthetischen Fasermaterialien unter Verwendung des Polykondensats als Egalisiermittel

Die Erfindung betrifft ein in Wasser lösliches oder dispergierbares Polykondensat, ein Verfahren zu seiner Herstellung und die Verwendung des Polykondensats als Egalisiermittel bei Verfahren zum gleichmäßigen Färben von Materialien aus Synthesefasern, wie z.B. Fasern aus Cellulosetriacetat, Polyurethan, Polyamiden, insbesondere aber von Fasern aus linearen Polyestern und deren Mischungen mit natürlichen Fasern mit Dispersionsfarbstoffen.

Es ist ein Verfahren zum gleichmäßigen Färben von Fasermaterial aus linearen Polyestern und deren Mischungen mit natürlichen Fasern mit wasserunlöslichen Dispersionsfarbstoffen nach der Ausziehmethode bekannt (deutsche Auslegeschrift 25 08 472), bei dem man den wäßrigen Färbebädern neben den genannten Farbstoffen und pH-regulierenden Substanzen noch als Egalisiermittel in Wasser lösliche oder dispergierbare lineare Polyester mit einem durchschnittlichen Molekulargewicht von 800 bis 5000, die durch Polykondensation von

a) einer oder mehreren gesättigten oder ungesättigten aliphatischen, cycloaliphatischen oder aromatischen Dicarbonsäure(n) mit
b) einem oder mehreren gesättigten oder ungesättigten aliphatischen, cycloaliphatischen oder aromatischen Diol(en)

erhalten worden sind und wobei 5—30 Mol-% aller Dicarbonsäure- oder Diol-Kettenglieder Sulfogruppen bzw. deren Salze tragen, in Mengen von 0,1 bis 5 g/l zusetzt.

Es ist auch schon vorgeschlagen worden, bei einem derartigen Verfahren als Dispergiermittel anstelle des in Wasser löslichen oder dispergierbaren linearen Polyesters einen in Wasser löslichen oder dispergierbaren verzweigten, sulfonatgruppenhaltigen Polyester mit einem Molekulargewicht von 600—5000 zu verwenden, bei dessen Herstellung, bezogen auf 100 Mol-% der Polycarbonsäurekomponente, 1 bis 40 Mol-% verzweigende Komponenten, d.h. beispielsweise Tricarbonsäuren, Tetracarbonsäuren, Trialkohole bzw. Tetraalkohole, eingesetzt werden.

Die erfindungsgemäßen Polykondensate besitzen weiter verbesserte Eigenschaften bei der Anwendung als Egalisiermittel zum gleichmäßigen Färben von Materialien aus Synthesefasern mit Dispersionsfarbstoffen.

Die Erfindung betrifft ein in Wasser lösliches oder dispergierbares Polykondensat, hergestellt durch Umsetzung von

A) einem in Wasser löslichen oder dispergierbaren linearen oder verzweigten Polyester mit einem durchschnittlichen Molekulargewicht von 600 bis 5000, der durch Polykondensation von
   a) 100 Mol-% einer oder mehreren gesättigten oder ungesättigten aliphatischen, cycloaliphatischen oder aromatischen Di- und gegebenenfalls Polycarbonsäure(n) mit
   b) 90 bis 120 Mol-% eines oder mehrerer gesättigten oder ungesättigten aliphatischen, cycloaliphatischen oder araliphatischen Di- und gegebenenfalls Polyols(Polyole) und/oder äthergruppenhaltigen gesättigten aliphatischen, cycloaliphatischen oder araliphatischen Diols(Diole) erhalten worden ist und wobei 5 bis 40 Mol-%, vorzugsweise 5 bis 30 Mol-%, aller Di- und Polycarbonsäure- oder Di- oder Polyolkettenglieder Sulfogruppen in Form von Salzen tragen, und

B) einer Verbindung der allgemeinen Formel

$$R—O—(CH_2CH_2O)_m—CH_2CH_2OH$$

wobei

m = 5 bis 50 und

R ein Alkyl-, Alkenyl-, Acyl-, Aryl- oder Aralkyl- Rest mit 6 bis 22 C-Atomen, der Ricinusölrest oder die Gruppierung $R'—COO—CH_2CH_2CH_2CH_2—$, wobei R' ein Alkyl- oder Alkenylrest mit 6 bis 22 C-Atomen, ist,

im Gewichtsverhältnis A:B = 1:(0,2 bis 2).

Unter Acylrest wird der sich von einer organischen, aliphatischen oder aromatischen Carbonsäure ableitende Rest R''—CO— verstanden. Die für R und R' stehenden Reste können auch, insbesondere durch Hydroxyl, substituiert sein.

Zur Herstellung des erfindungsgemäßen Polykondensats werden die unter A und B gennanten Komponenten bei Temperaturen von 100 bis 300°C, vorzugsweise 150—250°C, zur Umsetzung gebracht, d.h. auf diese Temperaturen erhitzt und zusammengeschmolzen. Die Reaktionszeiten betragen 10 Minuten bis 10 Stunden, vorzugsweise 2 bis 5 Stunden. Normalerweise werden die Reaktionskomponenten A und B ohne Anwendung eines Lösungs- oder Verdünnungsmittels zusammengeschmolzen. Die Umsetzung kann bei Normaldruck durchgeführt werden, die Anwendung von Unterdruck ist jedoch zweckmäßig. Vorzugsweise wird die Polykondensation bei einem Druck von 0,53 bis 40 mbar durchgeführt. Die bei der Umsetzung entstehenden flüchtigen Produkte werden abdestilliert. Zweckmäßigerweise wird die Reaktionsmischung während der Umsetzung gerührt.

Die Umsetzung zwischen dem Polyester A und der Äthoxylierungskomponente B erfolgt gewöhnlich in Anwesenheit eines Veresterungs- bzw. Umesterungskatalysators. Derartige Katalysatoren besitzen z.B. die allgemeine Formel

$$Me(OR)_x$$

wobei

X die Wertigkeit des Metalls Me und

Me Titan, Natrium, Kalium, Calcium, Magnesium und

R alkyl mit 1 bis 6 C-Atomen

bedeuten. Es können aber auch andere bekannte Veresterungs-oder Umesterungskatalysatoren, wie Acetate, beispielsweise Mangan- oder Zinkacetat, verwendet werden. Die Polykondensation kann aber (meist bei einer Verlängerung der Reaktionszeit) auch ganz ohne Katalysator durchgeführt werden.

Die erfindungsgemäßen Polykondensate stellen zähe Schmelzen dar, die, mit Wasser verdünnt, klare bis opaliszierende viskose Lösungen bzw. Dispersionen liefern. Bei der Verdünnung mit Wasser kann man sowohl die Schmelze in Wasser als auch Wasser in das Polykondensat einrühren. Die wäßrigen Lösungen des Polykondensats zeigen im allgemeinen einen schwach sauren pH-Wert. Es ist zweckmäßig, die wäßrigen Lösungen durch Einrühren einer anorganischen oder organischen Base, wie z.B. Natron- oder Kalilauge, auf pH-Werte von 6 bis 7 einzustellen.

Die zur Herstellung der erfindungsgemäßen Polykondensate benötigten Polyester können geradkettig oder verzweigt sein.

Die wasserlöslichen bzw. in Wasser dispergierbaren linearen Polyester können in an sich bekannter Weise durch Polykondensation von 100 Mol-% Dicarbonsäuren mit 90 bis 120 Mol-% Diolen, wobei insgesamt 5 bis 40 Mol-%, vorzugsweise 5 bis 30 Mol-%, der Dicarbonsäuren und/oder der Dihydroxyverbindungen Sulfogruppen bzw. deren Salze tragen müssen, hergestellt werden.

Als Dicarbonsäuren können gesättigte und ungesättigte aliphatische, cycloaliphatische, araliphatische oder aromatische Dicarbonsäuren eingesetzt werden. Bevorzugt werden Dicarbonsäuren mit 4 bis 10 Kohlenstoffatomen, insbesondere die Benzoldicarbonsäuren. Beispiele für geeignete Dicarbonsäuren sind: Bernsteinsäure, Glutarsäure, Adipinsäure, Korksäure, Maleinsäure, Fumarsäure, Itakonsäure, Cyclohexandicarbonsäure-1,4, Cyclohexandicarbonsäure-1,3, Phthalsäure, Isophthalsäure, Terephthalsäure, die Naphthalindicarbonsaüren, wie z.B. 1,4-Naphthalindicarbonsäure, 1,5-Naphthalindicarbonsäure, ferner Diphensäure, Norbornandicarbonsäure usw. Anstelle der Dicarbonsäuren können auch deren Derivate, wie Anhydride, Säurehalogenide, insbesondere Säurechloride, Ester, insbesondere solche mit leicht abdestillierbaren Alkoholen mit 1 bis 4 C-Atomen, eingesetzt werden. Vorzugsweise wird ein Gemisch von Dicarbonsäuren und/oder Dicarbonsäurederivaten eingesetzt. Geeignete Ester, Anhydride und Säurechloride sind zum Beispiel: Terephthalsäuredimethylester, Terephthalsäure-diäthylester, Terephthalsäure-dipropylester, Terephthalsäure-di-isopropylester, Terephthalsäure-dibutylester, Isophthalsäure-dimethylester, Isophthalsäure-diäthylester, Isophthalsäure-dipropylester, Isophthalsäure-dibutylester, Phthalsäure-dimethylester, Phthalsäurediäthylester, Phthalsäure-dipropylester, Phthalsäure-di-isopropylester, Phthalsäuredibutylester, Malonsäure-dimethyl-, diäthyl-, -dipropyl- oder dibutylester, Bernsteinsäure-dimethyl-oder -dibutylester, Glutarsäurediäthyl- oder -di-isopropylester, Adipinsäure-diäthyl- oder -di-isobutylester, Pimelinsäuredimethyl-, -di-isopropyl- oder -dibutylester, Korksäure-dimethyl, -diäthyl-, -dipropyl- oder -dibutyl-ester, 1,4-Cyclohexan-di-carbonsäure-dimethyl-, -diäthyl-, -dipropyl-, -dibutylester, 1,2-Cyclohexan-dicarbonsäure-dimethyl-, -diäthyl-, dipropyl-, dibutylester, 1,3-Cyclohexan-dicarbonsäure-dimethyl-, diäthyl-, -dipropyl-, -dibutylester, Phthalsäure-anhydrid, Maleinsäureanhydrid, Bernsteinsäure-anhydrid, Phthalylchlorid.

Geeignete Ester können auch solche mit den nachstehend aufgeführten Diolen als Alkoholkomponente sein.

Als Diole für die erfindungsgemäß zu verwendenden linearen Polykondensate eignen sich gesättigte, ungesättigte aliphatische, cycloaliphatische und araliphatische Verbindungen, vorzugsweise solche mit 2 bis 10 Kohlenstoffatomen, vor allem gesättigte aliphatische, cycloaliphatische oder araliphatische Verbindungen mit Ätherbrücken. Bei den äthergruppenhaltigen Verbindungen bezieht sich aber der angegebene, bevorzugte Bereich von 2 bis 10 Kohlenstoffatomen lediglich auf jeden einzelnen der aliphatischen Teile zwischen 2 Ätherbrücken bzw. Sauerstoffatomen.

Beispiele für geeignete Diole sind: Äthylenglykol, Propandiol-1,2 und Propandiol-1,3, Äthylenglykol-mono-(3-hydroxypropyl)äther, Äthylenglykol-mono-(3-hydroxy-propyl-2)äther, Äthylenglykol-mono-(2-hydroxy-propyl)äther, Butandiole, insbesondere Butandiol-1,4-, Pentandiole, wie Pentandil-1,5, Hexandiole, insbesondere Hexandiol-1,6, Decandiol-1,10, Diäthylenglykol, Dipropylenglykol, Bis(3-hydroxypropyl)äther, Triäthylenglykol, Tetraäthylenglykol, Tripropylenglykol, 4,8-Dioxadecan-1,10-diol, Polyäthylenglykole vom Molekulargewicht 300 bis 2000, Polypropylenglykole vom Molekulargewicht 300 bis 2000, Polyäther des Propandiols-1,3 und gemischte Polyäther des Äthylenglykols mit Propylenglykol und/oder gegebenenfalls Propandiol-1,3, wobei die genannten Polyäther Molekularge-

wichte von 300 bis 2000 besitzen, Bis-(4-hydroxybutyl)-äther, 2-Methylenpropandiol-1,3, 2,4-Dimethyl-2-äthyl-hexandiol-1,3, 2-Athyl-2-butyl-propandiol-1,3, 2,2-Dimethyl-propandiol-1,3, 2-Äthyl-2-isobutyl-propandiol-1,3, 2,2,4-Trimethyl-hexandiol-1,6, 1,3-Dihydroxy-cyclohexan, 1,4-Dihydroxy-cyclohexan (Chinit), 1,4-Bis-(hydroxymethyl)cyclohexan, 1,3-Bis(hydroxymethyl)-cyclohexan, 1,2-Bis(hydroxymethyl)cyclohexan, 1,4-Bis(hydroxymethyl)benzol, 1,3-Bis(hydroxymethyl)-benzol, 2,6-Bis(hydroxymethyl)naphthalin.

Ferner sind beispielsweise Diphenole geeignet, die durch beiderseitige Umsetzung mit Äthylenoxid in araliphatische Bishydroxyverbindungen übergeführt worden sind und denen z.B. die allgemeine Formel

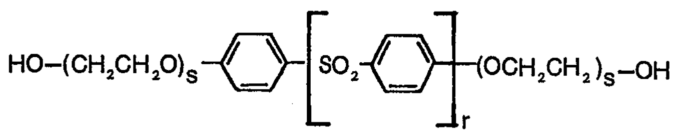

worin
r = 0 oder 1
s = 1, 2, 3 oder 4 ist,
zugeordnet werden kann. Vertreter derartiger Produkte sind beispielsweise:

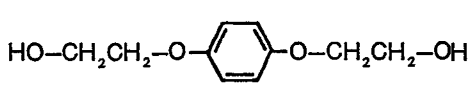

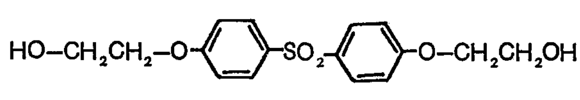

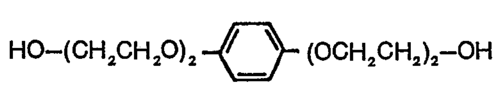

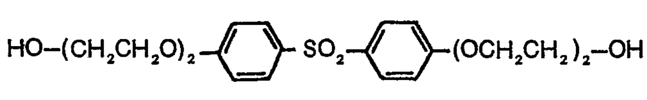

sowie auch andere, beidseitig mehrfach oxäthylierte Produkte.

Bevorzugte Diolkomponente ist das Diäthylenglykol, daneben auch das Triäthylenglykol. Auch die Diole können zweckmäßigerweise als Gemische, z.B. als Gemisch aus Diäthylen-und Triäthylenglykol eingesetzt werden. Andere bevorzugte Gemische enthalten 40 bis 95 Mol-% Diäthylen- und/oder Triäthylenglykol und 5 bis 60 Mol-% andere Diole insbesondere solche mit mehr als 2 Ätherbrücken und besonders vorteilhaft Polyäthylenglykole vom durchschnittlichen Molekulargewicht 300 bis 1000.

Ein aliquoter Teil der Dicarbonsäuren und der Diole kann durch Hydroxycarbonsäuren ersetzt werden, die vorzugsweise 2 bis 11 C-Atome enthalten.

Beispiele für geeignete Hydroxycarbonsäuren sind:
Glykolsäure, Milchsäure, 3-Hydroxypropionsäure, 4-Hydroxybuttersäure, 5-Hydroxypenten-3-säure, Mandelsäure, 3-Hydroxymethyl-cyclohexan-carbonsäure, 4-Hydroxymethyl-cyclohexan-carbonsäure, 6-Hydroxymethyl-decalin-carbonsäure(-2), 3-Hydroxyäthyl-benzoesäure,

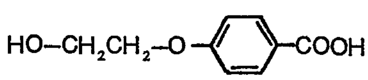

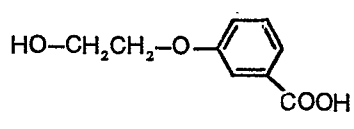

Auch Derivate von Hydroxycarbonsäuren, wie z.B. Ester, können eingesetzt werden.

Als Beispiel für geeignete Ester von Hydroxycarbonsäuren sind zu nennen; Milchsäuremethylester. Milchsäureäthylester, 4-Hydroxybuttersäure-methylester, Mandelsäureäthylester,

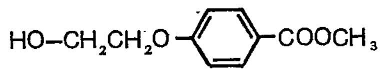

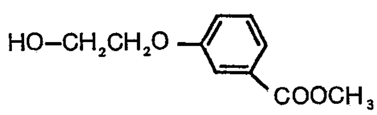

Soweit Hydroxycarbonsäuren bzw. deren Derivate eingesetzt werden, werden bevorzugt höchstens 40 Mol-% des Dicarbonsäure- und Diolgehalts durch Hydroxycarbonsäuren bzw. deren Derivate ersetzt.

Als Bausteine, die Sulfogruppen in Form von Salzen, insbesondere in Form von Alkyli-, Ammonium-, substituierten Ammonium- oder Triäthanolammonium-salzen tragen, können aliphatische, cycloaliphatische oder aromatische Dicarbonsäuren, aliphatische, cacloaliphatische oder araliphatische Diole, Hydroxycarbonsäuren und, soweit es sich um Carbonsäuren handelt, auch deren Derivate, insbesondere Ester verwendet werden. Beispiele für derartige Verbindungen sind: Natriumsulfonatobernsteinsäure, Kalium-sulfonatobernsteinsäure, Ammoniumsulfonatobernsteinsäure, 4-Natriumsulfonatophthalsäure, 4-Natriumsulfonatophthalsäureanhydrid, 4-Kaliumsulfonatophthalsäure, 2-Natrium sulfonatoterephthalsäure, 2-Natriumsulfonatoterephthalsäure-dichlorid, 5-Natrium-sulfonato-isophthalsäure, 5-Natriumsulfonatopropoxyisophthalsäure, 5-Natriumsulfonatoäthoxy-isophthalsäure, Natriumsulfonatobernsteinsäure-dimethylester, Natriumsulfonatobernsteinsäure-diäthylester, 4-Natriumsulfonatophthalsäure-diäthylester, 4-Natriumsulfonatophthalsäure-dimethylester, 4-Ammoniumsulfonatophthalsäure-dimethylester, 2-Natriumsulfonatoterephthalsäure-diäthylester, 5-Natriumsulfonatoisophthalsäure-dimethylester, 5-Natriumsulfonatopropoxy-isophthalsäure-dimethylester, 5-Natriumsulfonatoäthoxy-isophthalsäure-diäthylester, 5-Natriumsulfonatoäthoxy-isophthalsäure-diisopropylester, 5-Kaliumsulfonatoäthoxy-isophthalsäure-di-n-propylester,

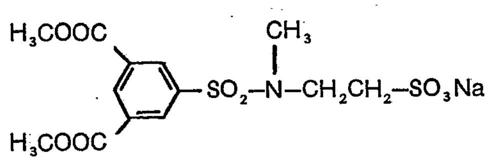

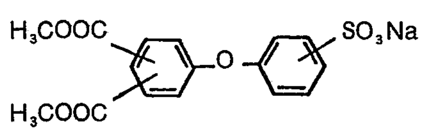

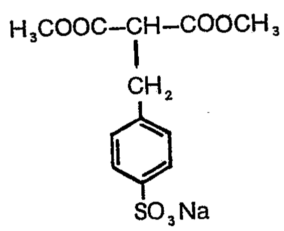

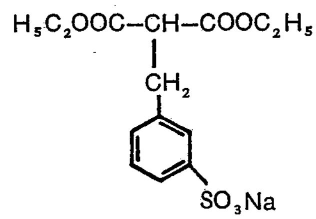

Als Beispiele für sulfonatogruppentragende Hydroxycarbonsäuren bzw. deren Ester sind zu nennen: 5-Natriumsulfonatoslizylsäure, 5-Natriumsulfonato-benzoesäuremethylester,

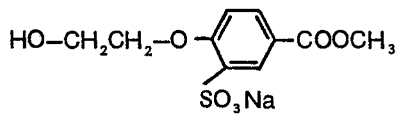

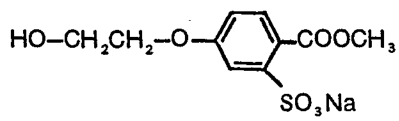

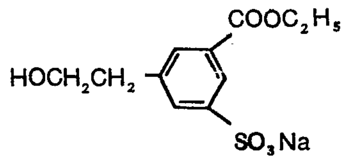

Ferner sind z.B. folgende sulfonatogruppenhaltige Diole bzw. äthoxylierte Diphenole geeignet:

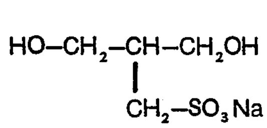

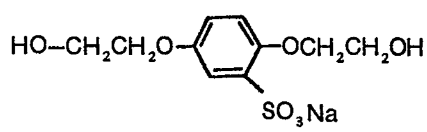

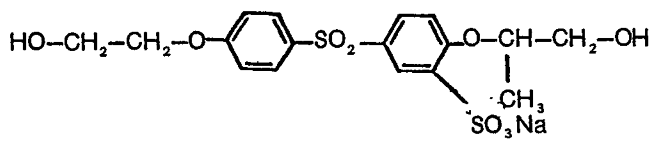

Dinatrium-3,6-disulfonato-2,7-dihydroxynaphthalin,
Dinatrium-3,6-disulfonato-1,8-dihydroxynaphthalin.

Bevorzugt sind für den erfindungsgemäßen Zweck lineare Polyester der nachstehenden allgemeinen Formel

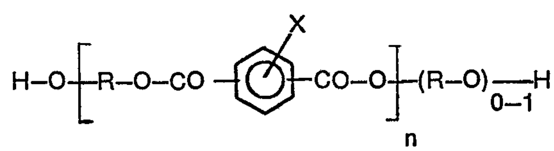

worin bedeuten

X = $—H$, $—O—CH_2—CH_2—CH_2—SO_3M$ oder $—SO_3M$
M = Alkalimetall, Ammonium,
R = ein Diolradikal (vgl. Aufzählung S. 6 bis 7) einer gesättigten oder ungesättigten aliphatischen, cycloaliphatischen oder araliphatischen Verbindung mit 2 bis 10 Kohlenstoffatomen und/oder einer äthergruppenhaltigen gesättigten aliphatischen, cycloaliphatischen oder araliphatischen Verbindung mit 2 bis 10 Kohlenstoffatomen in den aliphatischen Teilen zwischen zwei Sauerstoffatomen und
n = so groß ist, daß das mittlere Molekulargewicht des Polyesters zwischen 800 und 5000 liegt.

Besonders bevorzugt werden dabei wasserlösliche Polyester, in denen 10 bis 20 Mol-% der Phenylenreste durch Einkondensieren von 5-Natriumsulfonatopropoxy-isophthalsäure-dimethylester oder 5-Natriumsulfonato-isophthalsäuredimethylester,

40 bis 90 Mol-% durch Einkondensieren von Isophthalsäure oder ihrer Derivate, und

0 bis 40 Mol-% durch Einkondensieren von Terephthalsäure, bevorzugt in Form des Dimethylesters, erhalten werden, sowie
40 bis 100 Mol-% der eingesetzten Diole Diäthylen- und/oder Triäthylenglykol und
60 bis 100 Mol-% ein oder mehrere andere Diole, insbesondere solche mit mehr als 2 Ätherbrücken und besonders vorteilhaft Polyäthylenglykole vom durchschnittlichen Molekulargewicht 300 bis 1000 sind.

Eine Variation der obigen allgemeinen Formel besteht darin, daß man 0 bis 40 Mol-% des gesamten Anteils an Benzoldicarbonsäuren in der Formel durch eine aliphatische oder cycloaliphatische Dicarbonsäure mit 4 bis 10 Kohlenstoffatomen ersetzt.

Anstelle der linearen Polyester, die für Herstellung des erfindungsgemäßen Egalisiermittels bevorzugt sind, können auch verzweigte, wasserlösliche bzw. in Wasser dispergierbare Polyester verwendet werden, die im Prinzip wie die vorgenannten linearen Polyester hergestellt werden, nur muß bei ihrer Herstellung mindestens eine verzweigende Komponente eingesetzt werden.

Solche verzweigenden Komponenten können sein.

a) Polycarbonsäuren mit 3, 4 oder 5, vorzugsweise 3 und 4 Carboxylgruppen bzw. deren Ester, insbesondere mit niederen Alkoholen mit 1 bis 4 C-Atomen, deren Anhydride oder Säurechloride,

b) Polyhydroxyverbindungen mit 3, 4 oder 5, vorzugsweise 3 Hydroxygruppen,

c) Hydroxycarbonsäuren mit insgesamt 3, 4 oder 5, vorzugsweise 3 und 4 Hydroxy- und Carbonsäuregruppen bzw. deren Derivate, insbesondere deren Ester mit niederen Alkoholen mit 1 bis 4 C-Atomen.

Auch die vorstehend genannten Polycarbonsäuren mit 3, 4 oder 5, vorzugsweise 3 oder 4 Carboxylgruppen, die Polyhydroxyverbindungen oder die unter c) genannten Hydroxycarbonsäuren, können gegebenenfalls eine $SO_3M$-Gruppe tragen, wobei M ein Alkalimetall oder Ammonium bedeutet.

Geeignete verzweigende Polycarbonsäuren bzw. deren Derivate sind beispielsweise: Trimellithsäure, Trimesinsäure, Hemi/mellithsäure, Mellophansäure, Prehnitsäure, Pyromellithsäure, Aconitsäure, Tricarballylsäure, Äthantetracarbonsäure, Trimellithsäureanhydrid, Pyromellithsäuredianhydrid, Hemimellithsäureanhydrid, Mellophansäuredianhydrid, Prehnitsäureanhydrid, Trimellithsäuretrimethylester, Trimellithsäuretriäthylester, Trimesinsäuretrimethylester, Hemimellithsäuretrimethylester, Mellophansäuretetramethylester; Prehnitsäuretetramethylester, Pyromellithsäuretetramethylester, Pyromellithsäuretetraäthylester, 1,2,3-Cyclohexantricarbonsäure, 1,2,4-Cyclohexantricarbonsäure, 1,3,5-Cyclohexantricarbonsäure, Naphthalintricarbonlsäuren.

Geeignete Polyhydroxyverbindungen sind z.B. Glyzerin, Erythrit, Pentaerythrit, Trimethylolpropan, Trimethyloläthan.

Geeignete verzweigende Hydroxycarbonsäuren bzw. deren Derivate sind z.B. Zitronensäure, Apfelsäure, Weinsäure, Zitronensäuretrimethylester, Apfelsäuredimethylester, Weinsäuredimethylester.

Verzweigte wasserlösliche, bzw. in Wasser dispergierbare Polyester enthalten bevorzugt, bezogen auf 100 Mol-% der vorhandenen carboxylgruppentragenden Komponenten 1 bis 40 Mol-%, vorzugsweise 5 bis 40 Mol-%, verzweigende Komponenten. Vorzugsweise bestehen auch von den vorhandenen Dicarbonsäurekomponenten mindestens 40 Mol-% aus Benzoldicarbonsäuren, insbesondere aus Isophthalsäure. Weiterhin ist es vorteilhaft, wenn die Verbindungen der hydroxylgruppentragenden Komponenten so ausgewählt werden, daß sie, bezogen auf 100 Mol-% der Di- und Polyole, mindestens zu 40 Mol-% aus Diäthylenglykol und/oder Triäthylenglykol bestehen.

Die benötigten wasserlöslichen bzw. in Wasser dispergierbaren linearen oder verzweigten sulfonatgruppenenthaltenden Polyester können auch dadurch erhalten werden, daß man die wasserlöslichmachenden Sulfonatgrupen in entsprechen ungesättigte Polyester einführt, indem man z.B. gemäß der DT—OS 23 35 480 Bisulfit an Doppelbindungen enthaltende Polyester anlagert.

Die Bestimmung des scheinbaren mittleren Molekulargewichts erfolgt im Dampfdruckkosmometer in Dimethylformamid als Lösungsmittel.

Wegen der Dissoziation der Sulfonatgruppen liegt das wirkliche Mittel des Molekulargewichts höher als der so gemessene, scheinbare Wert. Der Meßwert ist jedoch ein hinreichend genaues Kriterium zur Charakterisierung des Kondensationsgrades der erfindungsgemäßen Polymischester und zur Bestimmung des Endprodukts der Kondensation.

Die zur Herstellung des erfindungsgemäßen Egalisierhilfsmittels benötigten Äthoxylierungsprodukte B sind z.T. als Emulgatoren im Handel und werden in an sich bekannter Weise durch Umsetzung der nachstehend genannten Ausgangsprodukte mit 5 bis 50 Molen Äthylenoxid erhalten.

Geeignete Ausgangsprodukte für die Umsetzung mit Äthylenoxid sind z.B. n-Hexanol, n-Heptanol, Isooctanol, Laurylalkohol, Cetylalkohol, Stearylalkohol, Oleylalkohol, Capronsäure, Caprinsäure, Caprylsäure, Laurinsäure, Myristinsäure, Palmitinsäure, Stearinsäure, Arachinsäure, Behensäure, Oleinsäure, Ricinoleinsäure, Linolsäure sowie die Monoester der vorgenannten Säuren mit Butandiol-(1,4), also z.B. 4-Hydroxybutyl-Caproat, 4-Hydroxybutyl-Laurat, 4-Hydroxybutyl-Palmitat, 4-Hydroxybutyl-Stearat, 4-Hydroxybutyl-Oleat, 4-Hydroxybutyl-Ricinoleat, 4-Hydroxybutyl-Linolat, ferner Ricinusöl, Phenol, Mandelsäure, Salizylsäure, $\alpha$-Naphthol, $\beta$-Naphthol, tert.-Butylphenol, Hexylphenole, Nonylphenole, Isododecylphenol, Tri-tert.-Butylphenol.

Die erfindungsgemäßen aus den Komponenten A und B hergestellten Polykondensationsprodukte sind für spezielle Anwendungsgebiete den bisher beschriebenen linearen oder verzweigten wasserlöslichen Polyesteren überlegen, so z.B. als Modifizierungsmittel für Aminoplastharze oder als Egalisiermittel beim Färben von Materialien aus Synthesefasern oder deren Mischungen mit natürlichen Fasern mit Dispersionsfarbstoffen. Bei dem erfindungsgemäßen Verfahren zum gleichmäßigen Färben von Materialien aus Synthesefasern und deren Mischungen mit natürlichen Fasern mit wasserunlöslichen Dispersionsfarbstoffen nach der Ausziehmethode wird den wäßrigen Färbebädern neben den

Dispersionsfarbstoffen und pH regulierenden Substanzen als Egalisiermittel noch ein erfindungsgemäßes Polykondensationsprodukt, zweckmäßigerweise in Form seiner wäßrigen Lösung in Mengen von 0,02 bis 5 g/l (bezogen auf 100%iges Polykondensationsprodukt), vorzugsweise 0,2 bis 2 g/l, zugesetzt und die Färbung im übrigen in bekannter Weise durchgeführt. Es wird eine hohe Stabilität der Färbeflotten erreicht, und es werden völlig egale Färbungen mit hoher Farbstoffausbeute erhalten. Auch bei schwierig zu färbenden Waren, wie Wickelkörpern, oder schwierig zu färbenden Farbstoffen werden bei dem erfindungsgemäßen Verfahren hervorragende Ergebnisse erhalten. Besonders gute Ergebnisse erhält man bei Schnellfärbeverfahren. Bei derartigen Schnellfärbeverfahren werden der zu färbenden Ware bei Temperaturen von ca. 130°C plötzlich verhältnismäßig große Farbstoffmengen angeboten. Die dadurch entstehende Gefahr von Unegalitäten wird durch die Anwendung des erfindungsgemäßen Polykondensationsprodukts vermieden.

Zur Durchführung des erfindungsgemäßen Färbeverfahrens werden die Färbebäder wie üblich bei 50—60°C angesetzt und durch pH regulierende Substanzen auf pH 4 bis 6 eingestellt. Dann wird das erfindungsgemäße Polykondensat zweckmäßigerweise in Form einer Lösung in Mengen von 0,02 bis 5 g/l, vorzugsweise 0,2 bis 2 g/l (bezogen auf 100%iges Polykondensat), zugesetzt.

Anschließend wird der vordispergierte, wasserunlösliche Dispersionsfarbstoff und das zu färbende Material zugegeben und auf die erforderliche Färbetemperatur aufgeheizt und die übliche Färbezeit lang gefärbt. Die Fertigstellung der Färbungen erfolgt in bekannter Weise, z.B. durch reduktive Nachbehandlung.

Bei Schnellfärbeverfahren wird die Flotte getrennt von dem zu färbenden Material unter Zusatz des erfindungsgemäßen Polykondensats hergestellt. Die auf die Färbetemperatur von 120—130°C erhitzte Flotte wird dann rasch in Kontakt mit dem zu färbenden Material gebracht. Falls nach der sogenannten Einschleustechnik gearbeitet wird, kann das erfindungsgemäße Polykondensationsprodukt auch dem Färbebad vor der Zugabe der Farbstoffdispersion zugegeben werden.

Bei der Anwendung der erfindungsgemäßen Polykondensate kann auch der Einsatz in anderen Lösungsmitteln erfolgen oder zweckmäßig sein, vor allem ein teilweiser Zusatz von anderen Lösungsmitteln, vorzugsweise von Alkoholen; wie Methanol, Athanol oder Isopropanol, oder auch dipolar aprotischen Lösungsmitteln, wie Dimethylformamid oder Dimethylsulfoxid.

In den nachstehenden Beispielen werden folgende Abkürzungen gebraucht.

SPO = 5-Natriumsulfonatopropoxy-isophthalsäuredimethyl-ester

DMT = Dimethylterephthalat

IPA = Isophthalsäure

DEG = Diäthylenglykol

PEG = Polyäthylenglykol

AEO = Äthylenoxid

SIM = 5-Natriumsulfonato-isophthalsäuredimethylester

DPG = Dipropylenglykol

PMSA = Pyromellitsäuredianhydrid.

Beispiel 1

(10 Mol-% SPO; 40 Mol-% DMT; 50 Mol-% IPA; 100 Mol-% DEG; 10 Mol-% PEG 600; + gleiche Menge Ricinusöl + 30 AEO einkondensiert).

In einem 4—1 Schliffvierhalskolben mit Rührer, Thermometer, Gaseinleitungsrohr und absteigendem Kühler werden 132,5 g Diäthylenglykol (1,25 Mol), 75 g Polyäthylenglykol 600 (0,125 Mol), 97 g Terephthalsäuredimethylester 0,5 Mol), 44,25 g 5-Natriumsulfonatopropoxy-isophthalsäure-dimethylester (0,125 Mol) und 2 g Titantetraisopropylat unter Stickstoffatmosphäre im Laufe einer Stunde auf 150°C erhitzt. Dabei destillieren etwa 12 g Methanol ab. Die Temperatur der Schmelze wird im Laufe einer Stunde auf 160°C und im Laufe einer weiteren Stunde auf 170°C gesteigert. Dabei destillieren nochmals ca. 18 g Methanol ab. Nun werden der Schmelze 103,75 g Isophthalsäure vom Reinheitsgrad 99% zugemischt, und unter ständigem Überleiten eines schwachen Stickstoffstroms wird anschließend die Temperatur stündlich um 10°C erhöht, bis nach 5 Stunden 220°C erreicht sind. Dabei destillieren allmählich ca. 20 g Wasser, das noch etwas Methanol enthält, ab. Nun wird noch 4 Stunden unter Stickstoff auf 220 bis 225°C geheizt, wobei, wie während der gesamten Reaktion, die Schmelze ständig kräftig gerührt werden muß. Jetzt wird ein Wasserstrahlvakuum von ca. 13 mbar angelegt und so lange bei 220 bis 225°C weitergerührt, bis das scheinbare mittlere Molekulargewicht einen Wert von ca. 2000 erreicht hat, was nach ca. 6 Stunden der Fall ist. Hierbei destilliert auch das überschüssige Diäthylenglykol ab. Man erhält 380 g einer hochviskosen, bernsteinfarbenen Schmelze, in die man bei 220 bis 225°C vorsichtig (Luftausschluß) die gleiche Gewichtsmenge des flüssigen, handelsüblichen Anlagerungsproduktes von 30 Mol Äthylenoxid an 1 Mol Ricinusöl einrührt. Anschließend wird die Mischung 4 Stunden bei 220 bis 225°C in einem Vakuum von ca. 13m bar unter gutem Rühren geheizt, wobei nur wenig Destillat entweicht und ca. 760 g helle, homogene Schmelze entstehen. Nach dem Abkühlen löst sie sich leicht mit 3040 g Wasser zu 3800 g einer hellen 20%igen Lösung vom pH Wert ca. 5,7, den man durch Zugabe von sehr wenig Natronlauge auf 7,0 erhöht. Wenn die Lösung nicht völlig klar ist, kann sie durch Verrühren mit 1% Kieselgur und Abdrücken über ein Druckfilter leicht völlig geklärt werden.

Beispiel 2

Ersetzt man in Beispiel 1 das SPO durch die äquivalente Menge 5-Natriumsulfonatoisophthalsäure oder deren Dimethylester, so erhält man bezüglich seiner Egalisierwirkung ein annähernd gleichwertiges Produkt.

Beispiel 3

Ersetzt man in Beispiel 1 das SPO durch eine äquivalente Menge 2-Natriumsulfonatoterephthalsäuredimethylester oder -diäthylester, so erhält man ebenfalls ein Produkt, das bezüglich seiner Wirkung als Egalisierhilfsmittel für Schnellfärbungen annähernd gleichwertig ist.

Beispiel 4

Ersetzt man in Beispiel 1 das SPO durch eine äquivalente Menge 4-Kalium-sulfonatophthalsäuredimethylester oder -dipropylester, so erhält man ebenfalls ein Produkt, das bezüglich seiner Wirkung als Egalisierhilfsmittel für Schnellfärbungen annähernd gleichwertig ist.

Beispiel 5

Wenn man in Beispiel 1 anstelle von 380 g Äthoxylierungsprodukt (=100%) der Schmelze nur 76 g zusetzt (=20%), im übrigen aber genau gleich lange kondensiert, erhält man ebenfalls ein sehr wertvolles Egalisierhilfsmittel, dessen Ausgiebigkeit ebenfalls größer als ohne Zusatz des Äthoxylierungsproduktes ist.

Beispiel 6

Wenn man in Beispiel 1 anstelle von 380 g Äthoxylierungsprodukt (=100%) der Schmelze nur 180 g des Äthoxylierungsproduktes (=50%) zusetzt, im übrigen aber genau gleich lange kondensiert, erhält man ebenfalls ein sehr wertvolles Egalisierhilfsmittel, dessen Ausgiebigkeit ebenfalls größer als ohne Zusatz des Äthoxylierungsproduktes ist.

Beispiel 7

Wenn man in Beispiel 1 anstelle von 380 g Äthoxylierungsprodukt (=100%) der Schmelze 760 g des Äthoxylierungsproduktes zusetzt, im übrigen aber genau gleich lange kondensiert, erhält man ebenfalls ein sehr wertvolles Egalisierhilfsmittel, dessen Ausgiebigkeit ebenfalls größer als ohne Zusatz des Äthoxylierungsproduktes ist.

Beispiel 8

(10 Mol-% SIM; 50 Mol-% IPA; 40 Mol-% DMT; 100 Mol-% DPG; + gleiche Menge des Additionsproduktes von 30 Mol AEO an Ricinusöl).

In der Versuchsapparatur des Beispiels 1 werden 201 g Dipropylenglykol (1,5 Mol), 44,4 g 5-Natriumsulfonatoisophthalsäuredimethylester (0,15 Mol), 116,4 g Terephthalsäuredimethylester und 2 g Titantetraisopropylat im Laufe einer Stunde auf 150°C geheizt (unter Stickstoff und bei gutem Rühren). Dabei destillieren etwa 21 g Methanol ab. Im Laufe einer zweiten Stunde wird dann die Temperatur auf 160°C und im Laufe einer dritten Stunde auf 170°C gesteigert. Dabei destillieren nochmals ca. 8 g Methanol ab. Nun werden der Schmelze unter Luftausschluß 124,5 g 99%ige Isophthalsäure zugesetzt. Dann wird die Temperatur stündlich weiter um 10°C erhöht, bis nach 5 Stunden eine Innentemperatur von 220°C erreicht ist. Dabei destillieren ca. 25 ml Wasser, dem noch etwas Methanol beigemischt ist, ab. Immer noch unter Überleiten eines schwachen Stickstoffstroms wird die Schmelze dann weiter 4 Std. bei 220—225°C kräftig verrührt, wobei nochmals ca. 8 Wasser abdestillieren. Dann wird ein Wasserstrahlvakuum von ca. 13 mbar angelegt und so lange weitergerührt, bis das scheinbare, mittlere Molekulargewicht ca. 2300 erreicht hat, was nach etwa 6 Stunden der Fall ist Man erhält 377 g einer bernsteinfarbenen Schmelze, der man noch heiß die gleiche Gewichtsmenge eines Anlagerungsproduktes von 30 Mol Äthylenoxid an 1 Mol Ricinusöl beimischt. Anschließend wird diese Mischung in einem Vakuum von ca. 13 mbar bei 220—225°C 4 Std. gut verrührt, wobei nur wenig Destillat entweicht und ca. 752 g einer hellen, homogenen Schmelze entstehen. Nach dem Abkuhlen löst sie sich leicht mit 3008 g Wasser zu 3760 g einer hellen, 20%igen Lösung vom pH-Wert 4,8, den man zweckmäßig durch Zugabe von wenig Natronlauge auf 7,0 erhöht. Das Produkt eignet sich hervorragend als Egalisierhilfsmittel für Schnellfärbemethoden bei Polyesterfäden.

Beispiel 9

Ersetzt man in Beispiel 8 das Anlagerungsprodukt von 30 Mol AEO an 1 Mol Ricinusöl durch die gleiche Gewichtsmenge eines Additionsproduktes von 10 Mol AEO an 1 Mol tert.-Butylphenol, so erhält man gleichfalls ein sehr wertvolles Egalisierhilfsmittel.

Beispiel 10

Ersetzt man in Beispiel 8 das Anlagerungsprodukt von 30 Mol AEO an 1 Mol Ricinusöl durch die gleiche Gewichtsmenge eines Additions-produktes von 20 Mol AEO an 1 Mol Oleylalkohol, so erhält man gleichfalls ein sehr wertvolles Egalisierhilfsmittel.

Beispiel 11

Ersetzt man in Beispiel 8 das Anlagerungsprodukt von 30 Mol AEO an 1 Mol Ricinusöl durch die gleiche Gewichtsmenge eines Additionsproduktes von 15 Mol AEO an 1 Mol Dodecylalkohol, so erhält man gleichfalls ein sehr wertvolles Egalisierhilfsmittel.

Beispiel 12

Ersetzt man in Beispiel 8 das Anlagerungsprodukt von 30 Mol AEO an 1 Mol Ricinusöl durch die gleiche Gewichtsmenge eines Additionsproduktes von 30 Mol AEO an 1 Mol Ricinusölsäure, so erhält man gleichfalls ein sehr wertvolles Egalisierhilfsmittel.

Beispiel 13

Ersetzt man in Beispiel 8 das Anlagerungsprodukt von 30 Mol AEO an 1 Mol Ricinusöl durch die gleiche Gewichtsmenge eines Additionsproduktes von 50 Mol AEO an 1 Mol Behensäure, so erhält man gleichfalls ein sehr wertvolles Egalisierhilfsmittel.

Beispiel 14

(15 Mol-% SIM; 75 Mol-% IPA; 10 Mol-% PMSA; 100 Mol-% DEG; + gleiche Gewichtsmenge eines Anlagerungsproduktes von 50 Mol AEO and 1 Mol Ricinusöl).

In der Versuchsapparatur des Beispiels 1 werden 159 g Diäthylenglykol (1,5 Mol), 66,6 g 5-Natriumsulfonatoisophthalsäuredimethylester (0,225 Mol), 32,7 g Pyromellithsäuredianhydrid (0,15 Mol) und 186,6 g 99%ige Isophthalsäure (1,125 Mol) gut verrührt und unter Stickstoffatmosphäre im Laufe einer Stunde auf 150°C geheizt. Die Temperatur wird dann stündlich um 10°C gesteigert, bis nach 5 Stunden 200°C erreicht sind. Nun wird so lange bei dieser Temperatur weitergeheizt, bis sich eine Probe klar in Wasser löst, also keine pulvrige Isophthalsäure mehr abscheidet. Dies ist nach etwa 2 Stunden der Fall, und die Säurezahl liegt dann bei 90, und das scheinbare mittlere Molekulargewicht beträgt ca. 800. Man rührt nun die gleiche Menge eines Additionsproduktes von 50 Mol Äthylenoxid an 1 Mol Ricinusöl in die vorliegenden 328 g Schmelze ein und heizt dann weiter 4 Stunden im Vakuum von ca. 10 Torr. Man erhält so ca. 652 g helle, homogene Schmelze, die sich nach dem Abkühlen leicht mit 2608 g Wasser zu 3260 g klarer, bernsteinfarbener 20%iger Lösung verdünnen läßt. Mit etwa 40 ml 25%iger Natronlauge wird sie neutral gestellt.

Beispiel 15

Ein ähnlich gutes Egalisierhilfsmittel für Schnellfärbeverfahren von Polyesterfasermaterial erhält man, wenn man anstelle des Anlagerungsproduktes von Beispiel 14 das Additionsprodukt von 7 Mol AEO an 1 Mol 4-Hydroxybutylstearat einkondensiert

Beispiel 16

Wickelkörper ("Muffs") aus texturierten Polyestergarnen werden auf einem HT-Färbeapparat bei einem Flottenverhältnis von 1:10 mit einer Flotte von 130°C durchströmt, die aus weichem Wasser von pH 4,5 (eingestellt mit Essigsäure) und 0,3 g/l eines Polykondensationsproduktes besteht, das gemäß Beispiel 1 durch Polykondensation aus

| | |
|---|---|
| Isophthalsäure | 50 Mol-% |
| Dimethylterephthalat | 40 Mol-% |
| 5-Natriumsulfonatoisopropoxy-isophthalsäuredimethylester | 10 Mol-% |
| Diäthylenglykol und | 100 Mol-% |
| Polyglykol MG 600 | 10 Mol-% |

sowie der gleichen Gewichtsmenge eines Anlagerungsproduktes von 30 Mol AEO und 1 Mol Ricinusöl hergestellt wurde.

Dieser Flotte wird mittels eines Einschleusgeräts ein mit Wasser von 40°C vordispergiertes Gemisch der folgenden Dispersionsfarbstoffe in handelsüblicher Form rasch zugesetzt:

0,46% des Farbstoffes der Formel I

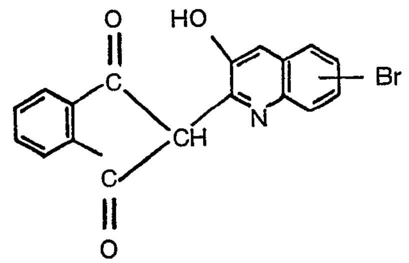

0,52% des Farbstoffes der Formel II

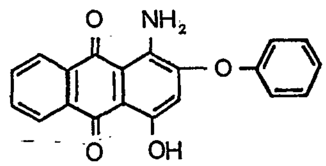

0,17% des Farbstoffes der Formel III (aus gleichen Teilen)

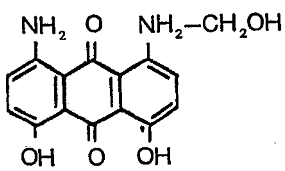

+

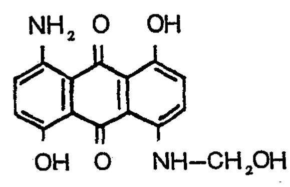

Die Durchström-Menge durch den Muff liegt bei 20 l/kg in der Minute. Nach 30 Minuten Behandlung bei 130°C wird abgekühlt, die Flotte abgelassen und reduktiv gereinigt.

Es resultiert eine vollkommen egale Braunfärbung mit voller Farbstoffausbeute.

Führt man dieselbe Färbung mit den gleichen Farbstoffen unter gleichen Bedingungen durch, jedoch ohne dem zugesetzten Polyester das Additionsprodukt von 30 Mol AEO an Ricinusöl einzukondensieren, so benötigt man davon für den gleichen Effekt 0,4 g pro Liter, also 33% mehr, obwohl dieses Produkt die doppelte Menges des teuren Polyesters enthält.

Beispiel 17

Es läßt sich leicht experimentell zeigen, daß die AEO-Additionsprodukte chemisch durch die vorgebildeten Polyester gebunden werden:

a) Wenn man 4,5 g der 20%igen Lösung von Beispiel 1 in einem ca. 25 qcm großen Aluminiumschälchen 2 Stunden bei 120° in einem Trockenschrank erhitzt, so erhält man einen farblosen, weichen und völlig homogenen Film.

b) Wenn man dem vorkondensierten Polyester das AEO-Additionsprodukt aber nur einrührt und dann gleich mit Wasser auf eine 20%ige Einstellung verdünnt, so erhält man auf gleichem Wege einen stark heterogenen Film: in einem weichen, milchig-trüben Untergrund sind zahlreiche farblose Scheibchen eingebettet.

Weitere Hinweise für die chemische Bindung sind die wesentlich höhere Viskosität der Lösung sowie deren höheres Molekulargewicht.

**Patentansprüche**

1. In Wasser lösliches oder dispergierbares Polykondensat, dadurch gekennzeichnet, daß es durch Umsetzung von

A) einem in Wasser löslichen oder dispergierbaren linearen oder verzweigten Polyester mit einem durchschnittlichen Molekulargewicht von 600 bis 5000, der durch Polykondensation von

a) 100 Mol-% einer oder mehrerer gesättigten oder ungesättigten aliphatischer, cycloaliphatischer oder aromatischer Di- und gegebenenfalls Polycarbonsäuren mit

b) 90 bis 120 Mol-% eines oder mehrerer gesättigter oder ungesättigter aliphatischer, cycloaliphatischer oder araliphatischer Di- und gegebenenfalls Polyols (Polyole) und/oder äthergruppenhaltigen gesättigten aliphatischen, cycloaliphatischen oder araliphatischen Diols (Diole) erhalten worden ist und wobei 5 bis 40 Mol-% Di- und Polycarbonsäure- oder Di- oder Polyolkettenglieder Sulfogruppen in Form von Salzen tragen, und

B) einer Verbindung der allgemeinen Formel

$$R—O—(CH_2CH_2O)_m—CH_2CH_2OH$$

wobei
m = 5 bis 50 und
R ein Alkyl-, Alkenyl-, Acyl-, Aryl- oder Aralkyl-rest mit 6 bis 22 C-Atomen, der Ricinusölrest oder die Gruppierung $R'—COO—CH_2CH_2CH_2CH_2—$, wobei R' ein Alkyl- oder Alkenylrest mit 6 bis 22 C-Atomen, ist,
im Gewichtsverhältnis A:B = 1:(0,2 bis 2) hergestellt worden ist.

2. Polykondensat nach Anspruch 1, dadurch gekennzeichnet, daß der Polyester die allgemeine Formel

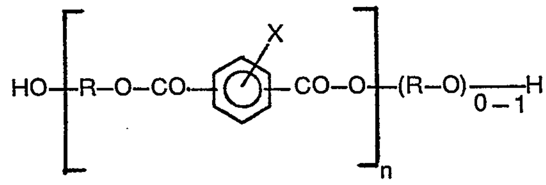

besitzt, worin n eine so große Zahl ist, daß das durchschnittliche Molekulargewicht des Polyesters zwischen 600 und 5000 liegt, X ein Wasserstoffatom oder eine Gruppe der Formeln

$$—O—CH_2—CH_2—CH_2—SO_3M \text{ oder } —SO_3M$$

bedeutet, in welcher M ein Wasserstoffatom oder ein Alkalimetallatom, insbesondere Natrium, oder eine Ammonium- oder substituierte Ammoniumgruppe, insbesondere Triäthanolammonium, darstellt und in der R ein Diol-Radikal mit 2 bis 10 Kohlenstoffatomen einer gesättigten oder ungesättigten aliphatischen, cycloaliphatischen oder araliphatischen Verbindung und/oder einer äthergruppenhaltigen gesättigten aliphatischen, cycloaliphatischen oder araliphatischen Verbindung mit 2 bis 10 Kohlenstoffatomen in den aliphatischen Teilen zwischen zwei Sauerstoffatomen ist.

3. Polykondensat nach Anspruch 2, dadurch gekennzeichnet, daß von den Phenylenresten des Polyesters 10 bis 20 Mol-% durch Einkondensieren von 5-Natriumsulfonatopropoxy-isophthalsäuredimethylester oder 5 Natriumsulfonatoisophthalsäure-dimethylester 40 bis 90 Mol-% durch Einkondensieren von Isophthalsäure oder ihrer Derivate und 0 bis 40 Mol-% durch Einkondensieren von Terephthalsäure, bevorzugt in Form des Dimethylesters, erhalten worden sind.

4. Polykondensat nach Anspruch 1, dadurch gekennzeichnet, daß der Polyester ein verzweigter Polyester ist und, bezogen auf 100 Mol-% der vorhandenen carboxylgruppentragenden Komponenten, 1 bis 40 Mol-% verzweigende Komponenten enthält.

5. Polykondensat nach den Ansprüchen 1 und 4, dadurch gekennzeichnet, daß der Polyester ein verzweigter Polyester ist, und, bezogen auf 100 Mol-% der vorhandenen carboxylgruppentragenden Komponenten, 5 bis 40 Mol-% verzweigende Komponenten enthält.

6. Polykondensat nach den Ansprüchen 1, 4 und 5, dadurch gekennzeichnet, daß ein Polyester verwendet wird, bei dessen Herstellung, bezogen auf 100 Mol-% der hydroxylgruppentragenden Komponenten, mindestens 40 Mol-% Diäthylenglykol und/oder Triäthylenglykol eingesetzt werden.

7. Verfahren zur Herstellung des Polykondensats nach den Ansprüchen 1 bis 6, dadurch gekennzeichnet, daß der in Wasser lösliche oder dispergierbare lineare oder verzweigte Polyester A mit dem Äthoxylierungsprodukt 10 Minuten bis 10 Stunden lang auf 100 bis 300°C erhitzt wird.

8. Verfahren nach Anspruch 7 dadurch gekennzeichnet, daß 2 bis 5 Stunden in Gegenwart eines Veresterungs- oder Umesterungskatalysators erhitzt und bei der Umsetzung entstehende flüchtige Produkte abdestilliert werden.

9. Verfahren nach den Ansprüchen 7 und 8, dadurch gekennzeichnet, daß auf Temperaturen von 150 bis 250°C erhitzt wird.

10. Verfahren nach den Ansprüchen 7—9, dadurch gekennzeichnet, daß die Umsetzung bei einem Druck von 0,53 bis 40 mbar durchgeführt wird.

11. Verfahren zum gleichmäßigen Färben von Fasermaterialien aus Synthesefasern und deren Mischungen mit natürlichen Fasern mit Dispersionsfarbstoffen nach der Ausziehmethode, wobei den wäßrigen Färbebädern neben den Farbstoffen pH-regulierende Substanzen und Egalisiermittel zugesetzt werden, dadurch gekennzeichnet, daß als Egalisiermittel ein Polykondensationsprodukt der Ansprüche 1 bis 6 in Mengen von 0,02 bis 5 g/l zugesetzt wird.

12. Verfahren nach Anspruch 11, dadurch gekennzeichnet, daß das Egalisiermittel in Mengen von 0,2 bis 2 g/l zugesetzt wird.

13. Verfahren nach den Ansprüchen 11 und 12, dadurch gekennzeichnet, daß es als Schnellfärbeverfahren durchgeführt wird.

## Claims

1. A polycondensate which is soluble or dispersible in water, characterised in that it has been prepared by reacting

A. a linear or branched polyester which is soluble or dispersible in water, has an average molecular weight of 600 to 5000 and has been obtained from the polycondensation of

a. 100 moles percent of one or several saturated or unsaturated aliphatic, cycloaliphatic or aromatic dicarboxylic acid and optionally polycarboxylic acid, with

b. 90 to 120 moles percent of one or several saturated or unsaturated aliphatic, cycloaliphatic or araliphatic diols and optionally polyols and/or saturated aliphatic, cycloaliphatic or araliphatic diols containing ether groups, 5 to 40 moles percent of all dicarboxylic and polycarboxylic acid chain members or diol or polyol chain members carrying sulpho groups in the form of salts, and

B. a compound of the general formula

$$R—O—(CH_2CH_2O)_m—CH_2CH_2OH$$

wherein
m is 5 to 50 and
R is an alkyl, alkenyl, acyl, aryl or aralkyl radical having 6 to 22 carbon atoms, castor oil radical or the group $R'—COO—CH_2CH_2CH_2CH_2—$, R' being an alkyl or alkenyl radical having 6 to 22 carbon atoms,
at a weight ratio of A:B to 1:(0,2 to 2).

2. Polycondensate as claimed in claim 1, characterised in that the polyester has the general formula

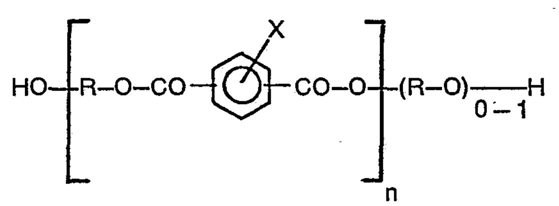

wherein n is a number sufficiently large that the average molecular weight of the polyester is between 600 and 5000, X is a hydrogen atom or a group of the formula

$$—O—CH_2—CH_2—CH_2—SO_3M \text{ or } —SO_3M$$

wherein M is a hydrogen or alkali metal atom, in particular sodium, or an ammonium or substituted ammonium group, in particular triethanol ammonium, and wherein R is a diol radical having 2 to 10 carbon atoms of a saturated or unsaturated aliphatic, cycloaliphatic or araliphatic compound and/or of a saturated aliphatic, cycloaliphatic or araliphatic compound containing ether groups and having 2 to 10 carbon atoms in the aliphatic parts between two oxygen atoms.

3. Polycondensate as claimed in claim 2, characterised in that of the phenylene radicals of the polyester 10 to 20 moles percent were obtained by co-condensing dimethyl 5-sodium sulphonatopropoxyisophthalate or dimethyl 5-sodium sulphonatoisophthalate, 40 to 90 moles percent were obtained by co-condensing isophthalic acid or its derivatives and 0 to 40 moles percent were obtained by co-condensing terephthalic acid, preferably in the form of the dimethyl ester.

4. Polycondensate as claimed in claim 1, characterised in that the polyester is branched and contains 1 to 40 moles percent of branching components relative to 100 moles percent of the present components carrying carboxyl groups.

5. Polycondensate as claimed in claims 1 and 4, characterised in that the polyester is branched and contains 5 to 40 moles percent of branching components relative to 100 moles percent of the present components carrying dicarboxylic groups.

6. Polycondensate as claimed in claims 1, 4 and 5, characterised in that a polyester is used, in the production of which, relative to 100 moles percent of the components carrying hydroxyl groups, at least 40 moles percent of diethylene glycol and/or triethylene glycol are employed.

7. Process for producing the polycondensate as claimed in claims 1 to 6, characterised in that the linear or branched polyester A which is soluble or dispersible in water is heated with the ethoxylation product to 100 to 300°C for 10 minutes to 10 hours.

8. Proces as claimed in claim 7, characterised in that heating is carried out for 2 to 5 hours in the presence of an esterification or transesterification catalyst and that volatile products generated in the reaction are removed by distillation.

9. Process as claimed in claims 7 and 8, characterised in that heating is carried out to temperatures of 150 to 250°C.

10. Process as claimed in claims 7 to 9, characterised in that the reaction is carried out at a pressure of 0.53 to 40 mbars.

11. Process for the even dyeing of fibre materials of synthetic fibres and their blends with natural fibres using disperse dyestuffs by the exhaust method, wherein pH-regulating substances and levelling agents are added to the aqueous dye baths in addition to the dyestuffs, characterised in that the levelling agent added is a polycondensation product as claimed in claims 1 to 6 in quantities of from 0.02 to 5 g/litre.

12. Process as claimed in claim 11, characterised in that the levelling agent is added in quantities of from 0.2 to 2 g/litre.

13. Process as claimed in claims 11 and 12, characterised in that it is carried out as a rapid dyeing process.

**Revendications**

1. Polycondensat soluble ou dispersable dans l'eau, caractérisé en ce qu'il été préparé par réaction de:

A) un polyester linéaire ou ramifié, soluble ou dispersable dans l'eau, d'un poids moléculaire moyen de 600 à 5000, qui a été obtenu par polycondensation de:

a) 100% en moles d'un ou plusieurs acides di- et éventuellement poly-carboxyliques, aromatiques, cyclo-aliphatiques ou aliphatiques, saturés ou insaturés, avec

b) de 90 à 120% en moles d'un ou plusieurs di- et éventuellement polyols araliphatiques, cycloaliphatiques ou aliphatiques, saturés ou insaturés, et/ou diols araliphatiques, cycloaliphatiques ou aliphatiques saturés contenant des groupes éthers,

et dans lequel de 5 à 40% en moles de tous les maillons de chaîne formés chacun par un acide di- ou polycarboxylique ou par un di- ou polyol portent des groupes sulfo sous la forme de sels, et

B) un composé répondant à la formule générale

$$R—O—(CH_2CH_2O)_m—CH_2CH_2OH$$

dans laquelle
m est un nombre de 5 à 50 et
R représente un radical alkyle, alcényle, acyle, aryle ou aralkyle contenant de 6 à 22 atomes de carbone, le radical de l'huile de ricin ou un groupement $R'—COO—CH_2CH_2CH_2CH_2—$ dans lequel R' représente un radical alkyle ou alcényle contenant de 6 à 22 atomes de carbone,
dans le rapport pondéral A:B = 1:(0,2 à 2).

2. Polycondensat selon la revendication 1, caractérisé en ce que le polyester répondant à la formule générale:

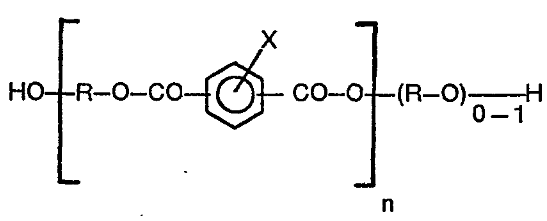

dans laquelle

n est un nombre tel que le poids moléculaire moyen du polyester soit compris entre 600 et 5000,
X représente un atome d'hydrogène ou un groupe répondant à l'une des formules:

$$—O—CH_2—CH_2—CH_2—SO_3M \text{ et } —SO_3M$$

où M représente un atome d'hydrogène ou un atome de métal alcalin, plus particulièrement de sodium, ou un groupe ammonium ou ammonium substitué, plus spécialement triéthanol-ammonium,

et

R représente un radical de diol contenant de 2 à 10 atomes de carbone d'un composé araliphatique, cycloaliphatique ou aliphatique, saturé ou insaturé, et/ou d'un composé araliphatique, cycloaliphatique ou aliphatique saturé, contenant des groupes éthers et renfermant de 2 à 10 atomes de carbone dans les parties aliphatiques comprises entre 2 atomes d'oxygène.

3. Polycondensat selon la revendication 2, caractérisé en ce que de 10 à 20% en moles des radicaux phénylènes du polyester ont été obtenu en introduisant par condensation du (sodium-sulfonato-propoxy)-5 isophtalate de diméthyle ou du (sodium-sulfonato)-5 isophtalate de diméthyle, de 40 à 90% en moles par condensation de l'acide isophtalique ou de ses dérivés, et de 0 à 40% en moles par condensation de l'acide téréphtalique, de préférence sous la forme de l'ester dimethylique.

4. Polycondensat selon la revendication 1, caractérisé en ce que le polyester est un polyester ramifié, et qu'il contient, pour 100% en moles des composantes porteuses de groupes carboxy présentes, de 1 à 40% en moles de composantes ramifiantes.

5. Polycondensat selon l'une des revendications 1 et 4, caractérisé en ce que le polyester est un polyester ramifié, et qu'il contient, pour 100% en moles des composantes porteuses de groupes carboxy présentes, de 5 à 40% en moles de composantes ramifiantes.

6. Polycondensat selon l'une quelconque des revendications 1, 4 et 5, caractérisé en ce qu'on utilise un polyester dans la préparation duquel on a mis en jeu, pour 100% en moles des composantes porteuses de groupes hydroxy, au moins 40% en moles de diéthylène-glycol et/ou de triéthylene-glycol.

7. Procédé de préparation du polycondensat selon l'une quelconque des revendications 1 à 6, caractérisé en ce qu'on chauffe pendant une durée de 10 minutes à 10 heures, à une température de 100 à 300°C, le polyester A linéaire ou ramifié, soluble ou dispersable dans l'eau, avec le produit d'éthoxylation.

8. Procéde selon la revendication 7, caractérisé en ce qu'on chauffe pendant une durée de 2 à 5 heures en présence d'un catalyseur d'estérification ou de transestérification et on chasse par distillation les produits volatils qui se forment au cours de la réaction.

9. Procédé selon l'une des revendications 7 et 8, caractérisé en ce qu'on chauffe à des températures de 150 à 250°C.

10. Procédé selon l'une quelconque des revendications 7 à 9, caractérisé en ce qu'on effectue la réaction sous une pression de 0,53 à 40 mbar.

11. Procédé pour teindre en nuances bien unies, avec des colorants de dispersion, par la méthode d'épuisement, des matières fibreuses constituées de fibres synthétiques ou de leurs mélanges avec des fibres naturelles, les bains de teinture aqueux étant additionés non seulement des colorants mais encore des substances régulatrices de pH et d'agents d'unisson, procédé caractérisé en ce qu'on ajoute, comme agent d'unisson, un produit de polycondensation selon l'une quelconque des revendications 1 à 6 en des quantités de 0,02 à 5 g/litre.

12. Procédé selon la revendication 11, caractérisé en ce qu'on ajout l'agent d'unisson en des quantités de 0,2 à 2 g/litre.

13. Procédé selon l'une des revendications 11 et 12, caractérisé en ce qu'il est effectué sous la forme d'un procédé de teinture rapide.